# EUROPÄISCHE PATENTSCHRIFT

(11) **EP 1 904 289 B1**
(45) Veröffentlichungstag und Bekanntmachung des Hinweises auf die Patenterteilung: **09.09.2009**
(21) Anmeldenummer: 06761807.4
(22) Anmeldetag: 15.07.2006
(51) Int. Cl.: B29C 70/54, B29B 11/16, B29C 70/30, B29D 31/00

(54) **VERFAHREN ZUR HERSTELLUNG EINES DREIDIMENSIONAL GEKRÜMMTEN FASERVERBUNDWERKSTOFF-STRUKTURBAUTEILS**
METHOD FOR PRODUCTION OF A THREE-DIMENSIONAL CURVED FIBRE COMPOSITE MATERIAL STRUCTURAL COMPONENT
PROCEDE POUR PRODUIRE UN COMPOSANT STRUCTURE CONSTITUE D'UN MATERIAU RENFORCE PAR DES FIBRES ET PLIE DE MANIERE TRIDIMENSIONNELLE

(30) Priorität: 19.07.2005 DE 102005033498; 06.07.2006 DE 102006031491
(43) Veröffentlichungstag der Anmeldung: 02.04.2008
(73) Patentinhaber: EUROCOPTER DEUTSCHLAND GmbH, 86609 Donauwörth (DE)
(72) Erfinder: WEIMER, Christian, 81543 München (DE)
(74) Vertreter: Pouillot, Laurent Pierre Paul
(86) Internationale Anmeldenummer: PCT/DE2006/001229
(87) Internationale Veröffentlichungsnummer: WO 2007/009440

(56) Entgegenhaltungen:
- EP-A- 0 056 352
- EP-A2- 0 073 648
- WO-A-02/42044
- US-A- 4 737 399
- US-A1- 2003 138 602
- US-A1- 2004 079 838

## Beschreibung

Die Erfindung betrifft ein Verfahren zur Herstellung eines dreidimensional gekrümmten Faserverbundwerkstoff-Strukturbauteils. Solche Faserverbundwerkstoff-Strukturbauteile werden beispielsweise als Holme oder Spants, d.h. tragende Bauteile eines Flugzeugflügels, eingesetzt. Der balkenförmige Holm hat die Aufgabe, die aus den Luft- und Trägheitskräften resultierende Querkräfte und Biegemomente aufzunehmen. Holme werden auch beispielsweise in Rotorblättern, z.B. von Windenergieanlagen und Hubschraubern, eingesetzt. Darüber hinaus finden Holme, insbesondere aus Faserverbundwerkstoff-Strukturbauteilen gebildete Holme, auch in Leitwerken eines Flugzeugs Anwendung.

Solche Holme bestehen in der Regel aus im Wesentlichen zwei Bauteilen, die unterschiedliche Aufgaben übernehmen. Die so genannten Gurte nehmen die Normalkräfte aus den Biegemomenten auf. Der die Gurte verbindende Schubsteg nimmt die Querkräfte auf und leitet den Schub zwischen den Gurten.

Bei Flugzeugen der Kunststoffbauweise, bei denen die Holme aus Faserverbundwerkstoff aufgebaut sind, werden die Gurte aus einer unidirektionalen Schicht (kurz UD-Schicht) hergestellt. Der Schubsteg besteht aus einem Gewebe oder Gelege unter beispielsweise 45°, z.B. dem so genannten AWV45. Unidirektionale Schicht ist die Bezeichnung für eine Schicht eines Faserkunststoffverbunds, in welcher alle Fasern in einer einzigen Richtung orientiert sind und wird daher auch als 0°-Fasergelege bezeichnet, d.h. die Fasern sind in der Bandlängsrichtung ausgerichtet. Die Fasern werden dabei als ideal parallel und homogen verteilt angenommen. Die unidirektionale Schicht ist transversal isotrop.

Aus unidirektionalen Schichten können alle in Faserkunststoffverbunden verwendeten Faserhalbzeuge, z.B. Gewebe, Vliese, Multiaxialgelege, aufgebaut werden.

Ein Gewebe stellt einen Kreuzverbund dar, der aus zwei, um 90° zueinander verdrehten, UD-Schichten aufgebaut ist.

In Flügelholmen als Faserverbundwerkstoff-Strukturbauteil ist es bekannt, die unidirektionale Schicht als Gurt zu verwenden, die die Normalkräfte aus den Biegemomenten aufnimmt. Neben dem Unidirektionalgelege für die Gurte enthält das Faserverbundwerkstoff-Strukturbauteil den Schubsteg, die aus einem Gewebe oder Gelege gebildet ist, wobei bei einem Gewebe durch das Verweben eine Ondulation der Fasern entsteht, welche zu einer Absenkung der faserparallelen Druckfestigkeit führen kann. In einem Gelege, das durch eine Papier- oder Fahnenheftung zusammengehalten wird, liegen die Fasern ideal parallel und gestreckt.

Dokument US 2004/079838 offenbart ein Verfahren zr Hertellung von Flügelholmen.

Zum Herstellen eines Vorformlings mit dreidimensionaler Gestalt eines gekrümmten Faserverbundwerkstoff-Strukturbauteils ist es bekannt, auf der Basis von verfügbaren Halbzeugen, d.h. zu bestimmten Gelegen zusammengefassten trockenen bzw. gegebenenfalls vorimprägnierten Fasern, mittels Nähtechnik Vorformeinzelteile mit der Endgestalt, d.h. jeweils dreidimensionale Vorformeinzelteile, herzustellen, die in dreidimensionalem Raum formstabil sind. Diese Vorformeinzelteile werden zu dreidimensionalen Vorformlingen vernäht. Der Nähvorgang ist dabei dreidimensional.

Dokument WO 02/42044 offenbart ein konfektionstechnisches Verfahren zur Herstellung von faserverstärkten Kunststoff-Bauteilen mit einem Steg und wahlweise einem Flansch und/oder einem Fuß unter Verwendung von textilen Zuschnitten als Ausgangsmaterial.

Alternativ kann ein so genanntes Binderpreforming eingesetzt werden, mit dem jedoch die Einbringung von unidirektionalen Bändern in die Gurte schwierig ist.

Es ist Aufgabe der Erfindung, ein Verfahren zu Herstellung eines dreidimensional gekrümmten Faserverbundwerkstoff-Strukturbauteils, beispielsweise eines Spants oder Holms im Flugzeug- oder Hubschrauberbau, vorzusehen, das es ermöglicht, mit geringem Fertigungsaufwand die unidirektionalen Fasern und die Fasergelege in eine dreidimensionale Form zu bringen, bei der die gewünschte Faserorientierung in den jeweiligen Bereichen sichergestellt ist.

Diese Aufgabe wird durch ein Verfahren mit den Merkmalen des Anspruchs 1 gelöst. Bevorzugte Ausführungsformen sind in den abhängigen Ansprüchen angegeben.

Der wesentliche Aspekt der Erfindung liegt darin, durch Verändern der Nähreihenfolge, d.h. gezieltes Vernähen von Basisfasergelegen, die an die aufzunehmenden Kräfte durch die einzelnen Bereiche des Faserverbundstrukturwerkstoffbauteils angepasst sind, in flächiger Weise, zunächst einen vorkonfektionierten Fasergelegestreifen mit Fasergelegeanteilsbereichen unterschiedlicher Ausrichtung, einschließlich unidirektionaler Faserstreifen und beispielsweise Faserausrichtungen in einem Bereich von ±45° bis ±60° herzustellen. Dieser vorkonfektionierte Fasergelegestreifen wird dann dreidimensional entsprechend der gewünschten Kontur des herzustellenden Faserverbundwerkstoff-Strukturbauteils drapiert, so dass ein Teil des vorkonfektionierten Fasergelegestreifens gegenüber einem anderen Bereich des Fasergelegestreifens aus der Arbeitsebene abgewinkelt wird, vorzugsweise einachsig um eine Krümmungsachse gekrümmt wird, die sich vorzugsweise senkrecht zu den unidirektionalen Fasern und parallel zur Bandebene der unidirektionalen Faser erstreckt. In dieser dreidimensional drapierten Form wird der vorkonfektionierte Fasergelegestreifen auf ein Trägermaterial aufgenäht zum Ausbilden eines stabilisierten ersten Sub-Fasergelege-Vorformlings.

Besonders bevorzugt für den Einsatz im Flugzeugbau zur Ausbildung von Faserbundwerkstoff-Strukturbauteilen, beispielsweise Holme formenden Faserverbundwerkstoff-Strukturbauteilen, ist es, wenn das Basisfasergelege eine Faserausrichtung hat, die im Bereich von ±30° bis ±65°, vorzugsweise im Bereich von ±45° bis ±60° liegt, und insbesondere bevorzugt eine ±45° Faserausrichtung hat.

Nach einer besonders bevorzugten Ausführungsform wird der vorkonfektionierte Fasergelegestreifen so drapiert, dass der unidirektionale, 0°-Fasergelegestreifen im Sub-Fasergelege-Vorformling Teil eines Gurtelements eines späteren Biegeträgerquerschnitts des herzustellenden Faserverbundwerkstoff-Strukturbauteils bildet.

Dabei wird bevorzugterweise vom 0°-Fasergelegestreifen für die Herstellung und Drapierung des vorkonfektionierten Fasergelegestreifens ausgegangen, d.h. dieser Bereich wird im ersten Nähschrift flach und im Schritt des Aufnähens auf einen Träger entsprechend der gewünschten Form platziert. Das Basisfasergelege mit anderer Ausrichtung der Fasern wird entsprechend, vorzugsweise in der Ebene, verzerrt, dass es der durch das UD-Band vorgegebenen Form folgt.

Nach einer besonders bevorzugten Ausführungsform, insbesondere zum Ausbilden eines C-Holms als Faserverbundwerkstoff-Strukturbauteil werden die Schritte a) bis f) ein zweites Mal, nämlich zur Bildung von mindestens einem zweiten Sub-Fasergelege-Vorformling durchgeführt, wobei sowohl der erste als auch der zweite Sub-Fasergelege-Vorformling im Wesentlichen L-Form haben. Der zweite Sub-Fasergelege-Vorformling wird mit dem ersten Sub-Fasergelege-Vorformling als zweite Lage schachtelungsartig in den ersten Sub-Fasergelege-Vorformling eingefügt und mit diesem durch Nähen verbunden. Dabei werden die Sub-Fasergelege-Vorformlinge vorzugsweise schachtelungsartig ineinander eingefügt, indem ein mit einem Basisstreifen, der in der Breite gegenüber dem anderen Basisstreifen des anderen Sub-Fasergelege-Vorformlings reduziert ist, hergestellter Sub-Fasergelege-Vorformling überlappend drapiert wird und durch Nähen verbunden wird, vorzugsweise überlappen somit die jeweiligen Basisstreifen zumindest bereichsweise.

Vorzugsweise werden die Sub-Fasergelege-Vorformlinge gemeinsam, d.h. im verbundenen Zustand mit dem Fasergelege-Vorformling, in einem weiteren Schritt mit einem aushärtbaren Harz getränkt und das Harz ausgehärtet.

Nach einer bevorzugten Ausführungsform kann dabei das Trägermaterial vor dem Tränken mit Harz entfernt werden. Alternativ kann das Trägermaterial ebenfalls mit Harz getränkt werden.

Bei dem Vorgang des Aufnähens des vorkonfektionierten Fasergelegestreifens auf ein Trägermaterial zum Herstellen eines dreidimensional gekrümmten Fasergelege-Vorformlings wird vorzugsweise der vorkonfektionierte Fasergelegestreifen, der dem Stegstreifenbereich entspricht, mit Vorschub und gleichzeitiger Drehung beaufschlagt, so dass beim Nähvorgang eine Verzerrung der Faseranordnung erzielt wird und die dreidimensionale Raumform sowie die Krümmung, die gewünscht wird, erzielt werden. Dazu kann vorzugsweise der Nähvorgang durch Verwendung einer Schablone in einer Ebene unterstützt werden. In der Schablone sind dabei die Nahtlinien, welche zu einer Verzerrung des beispielsweise den Steg bildenden mehrdirektionalen Geleges mit dem unidirektionalen Gelege aufgezeichnet.

Nachfolgend wird an einem Beispiel eines C-Holms die Herstellung eines Faserverbundwerkstoff-Strukturbauteils mit einem Fasergelege-Vorformling gemäß der Erfindung beschrieben.

Dabei sollen die Gurtbereiche des C-Holms aus unidirektionalem Band (mit so genannten 0°-Fasern) gebildet werden, während der Stegbereich aus einem in einer Ebene drapierbaren Basisfasergelege oder gegebenenfalls Gewebe herstellt wird. Das Basisfasergelege ist vorzugsweise ein ±45°-Fasergelege, d.h. ein Bandmaterial, dessen Fasern unter dem Winkel + bzw. -45° zur Bandlängsrichtung verlaufen. Andere Basisfasergelege mit anderer Faserausrichtung können verwendet werden.

Nach dem Zuschneiden des Basisfasergeleges und des unidirektionalen Bandes wird das unidirektionale Band auf bzw. an dem Basisfasergelege positioniert. Dabei wird das unidirektionale Fasergelegeband nicht notwendigerweise auf oder an dem gesamten Basisfasergelege angelegt sondern kann sich auch nur über einen Teilbereich dieses Basisfasergeleges erstrecken. Andererseits kann sich das unidirektionale Fasergelegeband nach Bedarf auch über die gesamte Länge des Basisfasergeleges erstrecken.

Anschließend wird das unidirektionale Fasergelegeband auf dem Basisfasergelege fixiert. Dies geschieht flächig, d.h. in einer Ebene, ohne dass Formteile, welche das unidirektionale Fasergelegeband und das Basisfasergelege zueinander dreidimensional ausrichten, erforderlich sind. Beispielsweise kann das Fasergelegeband mit quer zur Faserrichtung des unidirektionalen Fasergelegebands verlaufenden Fixiernähten am Basisfasergelege fixiert werden. Dadurch entsteht ein flächiger, vorkonfektionierter Fasergelegestreifen, der einen das unidirektionale Fasergelegeband enthaltenden Gurtstreifenbereich und einen von dem unidirektionalen Fasergelegeband freien Stegstreifenbereich, der im Beispiel die ±45°-Faserausrichtung aufweist, hat. Diese Kombination aus Fasergelegeband mit 0°-Fasern und Fasergelegeband mit einer an die später erwartenden Belastungen angepasste Faserausrichtung wird in der Arbeitsebene, beispielsweise dem Nähtisch, bereitgestellt. Auch für diesen Nähvorgang kann eine Schablone auf dem Tisch bzw. eine automatische Steuerung in der Ebene die Position der Nähte vorgeben. Die Bandteile müssen dabei nicht verzerrt werden.

Anschließend wird die Anordnung mit 0°- und ±45°-Faserausrichtungsanteil entsprechend der Kontur des Holms oder Spantes drapiert und auf ein Trägermaterial, das ausreichend formstabil ist, aufgenäht. Vorzugsweise wird dabei das unidirektionale Band um eine Achse, die im Wesentlichen parallel zur Faserrichtung des unidirektionalen Bandes ist, aus der Arbeitsebene heraus abgewinkelt, so dass durch das unidirektionale Band die Gurte des Holms (gegenüberliegende Schenkel des Cs) gebildet werden. Der Stegstreifenbereich, der aus dem Basisfasergelegestreifen gebildet ist, verbleibt hingegen in der Arbeitsebene, wobei jedoch durch die dreidimensionale Drapierung des Gurtbereichs (ohne diesen zu verzerren) die Faseranordnung des Basisfasergeleges mit einer anderen als einer unidirektionalen Ausrichtung in der Ebene verzerrt wird. Dazu werden beim Drapiervorgang und dem sich anschließenden Vernähvorgang mit einem Trägermaterial vorzugsweise ein Vorschub und eine gleichzeitige Drehung, welche zur Verzerrung führt, des unidirektionalen Fasermaterials gegenüber dem Basisfasergelegestreifen vorgesehen. Auch dieser Nähvorgang kann automatisiert sein oder sich ebener Schablonen bedienen.

Dieser L-förmig drapierte Fasergelegestreifen wird auf ein formstabiles Trägermaterial drapiert und ein mittels einer zweiten Fixiernaht stabilisiert, so dass ein dem herzustellenden Faserverbundwerkstoff-Strukturbauteil, nämlich dem Holm, angepasster dreidimensional gekrümmter erster Sub-Fasergelege-Vorformling gebildet wird, insbesondere eine L-Form bestehend aus einem Gurt und zumindest einem Teil des Schubstegs. Beim Vernähen mit dem Trägermaterial wird die Fixiernaht an einem Übergangsbereich zwischen dem Gurtstreifenbereich und dem Stegstreifenbereich nur im Stegstreifenbereich angebracht, so dass die Verzerrung des Stegstreifenbereichs im Hinblick auf dessen Faserausrichtung fixiert wird. Das Trägermaterial dient vorrangig dazu, die Verzerrung des Stegstreifenbereichs zu fixieren, so dass es auch nur in diesem Bereich vorgesehen sein kann.

Anschließend wird ein zweiter Sub-Fasergelege-Vorformling, der ebenfalls L-förmig ist und einen Gurt und einen Teil des Schubstegs formt, in gleicher Weise hergestellt.

Die beiden Sub-Fasergelege-Vorformlinge werden miteinander zu einem Faser-Vorformling verbunden, indem ihre jeweiligen Stegbereiche zumindest teilweise überlappt werden und schachtelungsartig ineinander eingesetzt werden. Diese Anordnung wird durch weitere Nähte fixiert. Die resultierende Anordnung wird anschließend mit einem aushärtbaren Harz getränkt, wobei sie sowohl durch die Nähvorgänge als auch durch das Trägermaterial formstabil ist, so dass auch nach dem Aushärten des Harzes die gewünschte Form des Faserverbundwerkstoff-Strukturbauteils erhalten ist. Je nach Stabilität der vernähten Anordnung kann das Trägermaterial auch vor dem Tränken mit Harz entfernt werden.

Das erfindungsgemäße Verfahren mit den Nähschritten in der Arbeitsebene und dem nachfolgenden Aufrichten zwischen unidirektionalen Fasergelegebändern und einem flächigen Basisfasergelege kann auch für andere Faserverbundstrukturbauteile oder Holme verwendet werden, beispielsweise I-Holme oder Kastenholme, wobei dann die Anbindung zwischen unidirektionalem und mehrdirektionalem Fasergelege entsprechend erfolgt.

Bei dem Nähfixiervorgang wird vorzugsweise entlang eines Papierplots der beabsichtigten verlaufenden Naht, auf dem die Kontur aufgezeichnet ist, vernäht. Zur Führung des unidirektionalen Bandteils kann das unidirektionale Band, das am Steg fixiert ist, am Nähkopf geführt werden, so dass die Drapierung des multidirektionalen Geleges in der Ebene automatisch erfolgt.

## Patentansprüche

1. Verfahren zur Herstellung eines dreidimensional gekrümmten Faserverbundwerkstoff-Strukturbauteils, das einen vorbestimmten Biegeträgerprofilquerschnitt mit mindestens einem Stegbereich und mindestens einem sich daran anschließenden Gurtbereich mit 0°-Fasern aufweist, umfassend folgende Schritt:
a) Bereitstellen eines flächigen, in mindestens einer Ebene drapierbaren Basisfasergeleges;
b) Anordnen eines unidirektionalen Fasergelegebandes mit 0°-Fasern auf einem Teilbereich des bereitgestellten Fasergeleges, welcher in dem herzustellenden Faserverbundwerkstoffstrukturbauteil in dem mindestens einen Gurtbereich liegt;
c) Fixieren des Fasergelegebandes auf dem Basisfasergelege durch Vernähen mittels mindestens einer ersten Fixiernaht zum Ausbilden eines flächigen, vorkonfektionierten Fasergelegestreifens, der über einen das unidirektionale Fasergelegeband enthaltenden Gurtstreifenbereich und einen von dem unidirektionalen Fasergelegeband freien Stegstreifenbereich verfügt;
d) Bereitstellen des flächigen, vorkonfektionierten Fasergelegestreifens in einer Arbeitsebene;
e) Drapieren des vorkonfektionierten Fasergelegestreifens entsprechend der gewünschten Kontur des herzustellenden dreidimensional gekrümmten Faserverbundwerkstoff-Strukturbauteils, wobei
der Gurtstreifenbereich des Fasergelegestreifens gegenüber dem Stegstreifenbereich aus der Arbeitsebene heraus abgewinkelt wird und nur einachsig um mindestens eine Krümmungsachse, die sich senkrecht zu den 0°-Fasern und parallel zur Bandebene des unidirektionalen Fasergelegebands erstreckt, gekrümmt wird; und
der Stegstreifenbereich des Fasergelegestreifens im Wesentlichen nur in der Arbeitsebene drapiert wird und hierbei seine Faseranordnung verzerrt wird; und
f) Aufnähen des vorkonfektionierten Fasergelegestreifens auf ein in mindestens einer Ebene drapiertes Trägermaterial mittels mindestens einer zweiten Fixiernaht, die an einem Übergangsbereich zwischen dem Gurtstreifenbereich und dem Stegstreifenbereich nur im Stegstreifenbereich angebracht wird, so dass ein stabilisierter, dem herzustellenden Faserverbundwerkstoff-Strukturbauteil angepasster, dreidimensional gekrümmter erster Sub-Fasergelege-Vorformling gebildet wird.

2. Verfahren nach Anspruch 1, **dadurch gekennzeichnet, dass** das im Schritt a) bereitgestellte Basisfasergelege eine Faserausrichtung besitzt, die in einem Bereich von ±30° bis ±65° liegt, insbesondere in einem Bereich von ±45° bis ±60°, weiter vorzugsweise bei ±45°.

3. Verfahren nach Anspruch 1 oder 2, **dadurch gekennzeichnet, dass** in Schritt e) der 0°-Fasergelegestreifen als Referenz für die Drapierung und Fixierung des vorkonfektionierten Fasergelegestreifens dient.

4. Verfahren nach einem der vorhergehenden Ansprüche, **dadurch gekennzeichnet, dass** die Schritte a) bis f) erneut zur Bildung eines zweiten Sub-Fasergelege-Vorformlings durchgeführt werden und der zweite Sub-Fasergelege-Vorformling als zweite Lage schachtelungsartig in den ersten Sub-Fasergelege-Vorformling eingefügt und mit diesem durch Nähen zu einem Faser-Vorformling verbunden wird.

5. Verfahren nach Anspruch 4, **dadurch gekennzeichnet, dass** der erste Sub-Fasergelege-Vorformling und der zweite Sub-Fasergelege-Vorformling jeweils L-förmig sind und die von dem unidirektionalen Fasergelegeband freien Stegstreifenbereiche des ersten und des zweiten Sub-Fasergelege-Vorformlings miteinander zu einem Faser-Vorformling derart verbunden werden, dass der Faser-Vorformling eine C-Form hat.

6. Verfahren nach einem der vorhergehenden Ansprüche, **dadurch gekennzeichnet, dass** der Sub-Fasergelege-Vorformling oder der Faser-Vorformling in einem Schritt g) mit einem aushärtbaren Harz getränkt werden und das Harz ausgehärtet wird.

7. Verfahren nach Anspruch 6, **dadurch gekennzeichnet, dass** das Trägermaterial vor Schritt g) vom Faser-Vorformling und/oder dem Sub-Fasergelege-Vorformling entfernt wird.

8. Verfahren nach Anspruch 6, **dadurch gekennzeichnet, dass** das Trägermaterial in Schritt g) zusammen mit dem Sub-Fasergelege-Vorformling und/oder dem Faser-Vorformling mit Harz getränkt wird.

## Claims

1. Method for producing a three-dimensionally curved fibre composite material structural component having a predefined flexural member profile cross section with at least one web area and at least one adjacent flange area with 0° fibres, comprising the following steps:
a) providing a flat base fibre laid scrim that can be draped in at least one plane;
b) disposing a unidirectional fibre laid scrim tape with 0° fibres on a partial area of the provided fibre laid scrim which lies in the at least one flange area of the fibre composite material structural component to be produced;
c) fixing the fibre laid scrim tape on the base fibre laid scrim by sewing using at least one first fixation seam to create a flat prefabricated fibre laid scrim strip that has a flange strip area containing the unidirectional fibre laid scrim tape and a web strip area free of the unidirectional fibre laid scrim tape;
d) disposing the flat prefabricated fibre laid scrim strip in a working plane;
e) draping the prefabricated fibre laid scrim strip according to the desired contour of the three-dimensionally curved fibre composite material structural component to be produced, wherein
the flange strip area of the fibre laid scrim strip is angled out of the working plane with respect to the web strip area and is curved only monoaxially around at least one axis of curvature extending perpendicular to the 0° fibres and parallel to the tape plane of the unidirectional fibre laid scrim tape; and
the web strip area of the fibre laid scrim strip is draped essentially only in the working plane and in the process the fibre arrangement of the web strip area is distorted; and
f) sewing the prefabricated fibre laid scrim strip onto a support material that is draped in at least one plane using at least one second fixation seam provided at a transition area between the flange strip area and the web strip area only in the web strip area, so as to form a stabilised three-dimensionally curved first sub-fibre laid scrim preform that is adapted to the fibre composite material structural component to be produced.

2. Method according to Claim 1, **characterised in that** the base fibre laid scrim provided in step a) has a fibre orientation in a range from ±30° to ±65°, in particular in a range from ±45° to ±60°, further preferably of ±45°.

3. Method according to Claim 1 or 2, **characterised in that** in step e) the 0° fibre laid scrim strip serves as a reference for the draping and fixing of the prefabricated fibre laid scrim strip.

4. Method according to one of the preceding claims, **characterised in that** steps a) to f) are repeated so as to form a second sub-fibre laid scrim preform and the second sub-fibre laid scrim preform is inserted as a second layer into the first sub-fibre laid scrim preform so as to nest with it and is joined to the latter by sewing to form a fibre preform.

5. Method according to Claim 4, **characterised in that** the first sub-fibre laid scrim preform and the second sub-fibre laid scrim preform are each L-shaped and the web strip areas of the first and second sub-fibre laid scrim preforms that are free from the unidirectional fibre laid scrim tape are joined to each other to form a fibre preform in such a way that the fibre preform is C-shaped.

6. Method according to one of the preceding claims, **characterised in that** in a step g) the sub-fibre laid scrim preform or the fibre preform is impregnated with a curable resin and the resin is cured.

7. Method according to Claim 6, **characterised in that** the support material is removed from the fibre preform and/or the sub-fibre laid scrim preform before step g).

8. Method according to Claim 6, **characterised in that** in step g) the support material is impregnated with resin together with the sub-fibre laid scrim preform and/or the fibre preform.

## Revendications

1. Procédé pour fabriquer un composant de structure à base de matériau renforcé de fibres et incurvé de façon tridimensionnelle, qui présente une section profilée prédéfinie de support de section avec au moins une zone de nervure et au moins une zone de membrure s'y raccordant avec des fibres 0°, comprenant les étapes suivantes :
a) mise à dispositif d'un tissu à fibres de base en deux dimensions et pouvant être drapé dans au moins un plan ;
b) agencement d'une bande de tissu à fibres unidirectionnelle avec des fibres 0° sur une zone partielle du tissu à fibres mis à disposition, qui se situe dans la au moins une zone de membrure dans le composant de structure à base de matériau renforcé de fibres à fabriquer ;
c) fixation de la bande de tissu à fibres sur le tissu à fibres de base en cousant au moins une première couture de fixation pour la réalisation d'une bande de tissu à fibres en deux dimensions et préconfectionnée, qui dispose d'une zone de bande de membrure contenant la bande de tissu à fibres unidirectionnelle et d'une zone de bande de nervure débarrassée de la bande de tissu à fibres unidirectionnelle ;
d) mise à disposition de la bande de tissu à fibres en deux dimensions et préconfectionnée dans un plan de travail ;
e) drapage de la bande de tissu à fibres préconfectionnée en fonction du contour souhaité du composant de structure à base de matériau renforcé de fibres, incurvé en trois dimensions et à fabriquer,
la zone de bande de membrure de la bande de tissu à fibres étant coudée en face de la zone de bande de nervure à la sortie du plan de travail et étant incurvée seulement sur un axe autour d'au moins un axe de courbure, qui s'étend perpendiculairement aux fibres 0° et parallèlement au plan de bande de la bande de tissu à fibres unidirectionnelle ; et
la zone de bande de nervure de la bande de tissu à fibres étant drapée essentiellement uniquement dans le plan de travail et son agencement de fibres étant déformé dans le cas présent, et
f) couture de la bande de tissu à fibres préconfectionnée sur un matériau supérieur drapé dans au moins un plan au moyen d'au moins une seconde couture de fixation, qui est placée uniquement dans la zone de la bande de nervure sur une zone de transition entre la zone de bande de membrure et la zone de bande de nervure de sorte qu'une première ébauche de sous-tissu à fibres, stabilisée, adaptée au composant de structure à base de matériau renforcé de fibres à fabriquer et incurvé de façon tridimensionnelle est formée.

2. Procédé selon la revendication 1, **caractérisé en ce que** le tissu à fibres de base mis à disposition à l'étape a) présente une adaptation de fibres qui se situe dans une plage de ±30° à ±65°, en particulier dans une plage de ±45° à ±60°, également encore de préférence aux environs de ±45°.

3. Procédé selon la revendication 1 ou 2, **caractérisé en ce que,** à l'étape e), la bande de tissu à fibres 0° sert de référence pour le drapage et la fixation de la bande de tissu à fibres préconfectionnée.

4. Procédé selon l'une quelconque des revendications précédentes, **caractérisé en ce que** les étapes a) à f) sont effectuées à nouveau pour former une seconde ébauche de sous-tissu à fibres et la seconde ébauche de sous-tissu à fibres est insérée sous forme de seconde couche à la façon d'une imbrication dans la première ébauche de sous-tissu à fibres et est reliée à celle-ci par couture pour former une ébauche à fibres.

5. Procédé selon la revendication 4, **caractérisé en ce que** la première ébauche de sous-tissu à fibres et la seconde ébauche de sous-tissu à fibres sont chacune en forme de L et les zones de bande de nervure, débarrassées de la bande de tissu à fibres unidirectionnelle, de la première et de la seconde ébauche de sous-tissu à fibres sont reliées les unes aux autres pour former une ébauche à fibres de telle sorte que l'ébauche à fibres a une forme de C.

6. Procédé selon l'une quelconque des revendications précédentes, **caractérisé en ce que** l'ébauche de sous-tissu à fibres ou l'ébauche à fibres est imbibée dans une étape g) avec une résine durcissable et la résine est durcie.

7. Procédé selon la revendication 6, **caractérisé en ce que** le matériau support est enlevé avant l'étape g) du préformé à fibres et/ou du préformé de sous-tissu à fibres.

8. Procédé selon la revendication 6, **caractérisé en ce que** le matériau support est imbibé de résine à l'étape g) en même temps que l'ébauche de sous-tissu à fibres et/ou l'ébauche à fibres.
